# EUROPEAN PATENT APPLICATION

(11) **EP 4 230 658 A1**
(43) Date of publication of application: **23.08.2023**
(21) Application number: 22382125.7
(22) Date of filing: 16.02.2022
(51) Int. Cl.: C08B 15/02, C08B 15/08, C08L 1/04, D21C 5/00, D21B 1/04, D21C 9/00, D21H 11/16, D21H 17/00

(54) **A METHOD FOR OBTAINING NANOCELLULOSE**

(71) Applicant: Fundación Centro Technológico de Investigación Multisectorial, 15180 Culleredo (ES); Enso Innovation SL, 15180 Culleredo (ES); Nanocel Technology S.L., 15180 Culleredo (ES)
(72) Inventor:
(74) Representative: Isern Patentes y Marcas S.L.

(57) **Abstract**

The invention provides a method allowing to obtain a nanocellulose composition from a composition of cellulose fibers wherein an enzymatic hydrolysis of the cellulose fibers is performed simultaneously with a high pressure mechanical process. The invention is also addressed to the cellulose composition obtained from said method.

## Description

### TECHNICAL FIELD OF THE INVENTION

The present invention relates to the field of methods that allow obtaining nanocellulose compositions from a cellulose fiber composition.

### BACKGROUND OF THE INVENTION

Nanocellulose has attracted a lot of attention during the last decade, partly due to its unique properties and multiple applications. Despite the advantages associated to nanocellulose and to its multiple applications, the production cost of nanocellulose is still high as compared to that of other fibers.

The obtention of nanocellulose involves reducing the micrometric size of the starting cellulose paste to nanometric size by means of fiber cutting procedures. For that purpose, it is necessary to carry out several steps that facilitate fiber separation and their shortening, that are performed during the so-called pretreatments. Said pretreatments are commonly mechanical, enzymatic or chemical processes, and allow breaking certain bonds, which facilitate the process.

Obtaining nanocellulose through purely mechanical procedures involves a large energy expenditure that causes an increase in the obtained nanocellulose price. Thus, in order to achieve viable commercialization, efforts have been made to improve the pretreatments just mentioned.

Among the pretreatments studied to date, the enzymatic pretreatment has been the central subject of many scientific articles and patents, mainly interested in optimizing the enzymatic hydrolysis of cellulose fibers. In this process, certain enzymes break the bonds within the cellulose fibers, thereby separating chains and shortening them as well.

All the scientific articles and patents found to date focus on enzymatic hydrolysis as a pre-treatment carried out before a mechanical treatment, in a process for obtaining micro/nanocellulose in two phases. In this case, the cellulose paste is deposited in a reactor, wherein the paste is mixed with the corresponding enzyme(s) under agitation and for a minimum of 2h. After that, the reactor must be stopped, the pre-treated cellulose paste extracted, washed, and the reactor washed as well, among others. An operator must take the obtained paste and transfer it to a homogenizer (where the final mechanical process can take place) to continue shortening the fibers until they reach the desired size. Therefore, this two-stage process implies using a reactor (which involves its conditioning, cleaning, and energy consumption), working time of specialized staff, time for obtaining pre-treated cellulose pulp, a sequential methodology with the risk of intermediate contamination, etc.

Therefore, there is a need in the art for alternative methods for obtaining nanocellulose from cellulose fibers with a reduced cost, lower energy consumption, and technically more efficient that ensure a higher amount of good quality end-products.

### BRIEF DESCRIPTION OF THE INVENTION

In a first aspect, the invention is addressed to a method for obtaining a nanocellulose composition that comprises treating a composition comprising cellulose fibers with:
(i) an enzymatic hydrolysis treatment and,
(ii) a high pressure mechanical treatment at a pressure of between 50 bars - 1500 bars,
wherein treatments (i) and (ii) are performed simultaneously on the composition of cellulose fibers.

In a second aspect, the invention is addressed to a nanocellulose composition obtained by the method according to the first aspect.

### BRIEF DESCRIPTION OF THE FIGURES

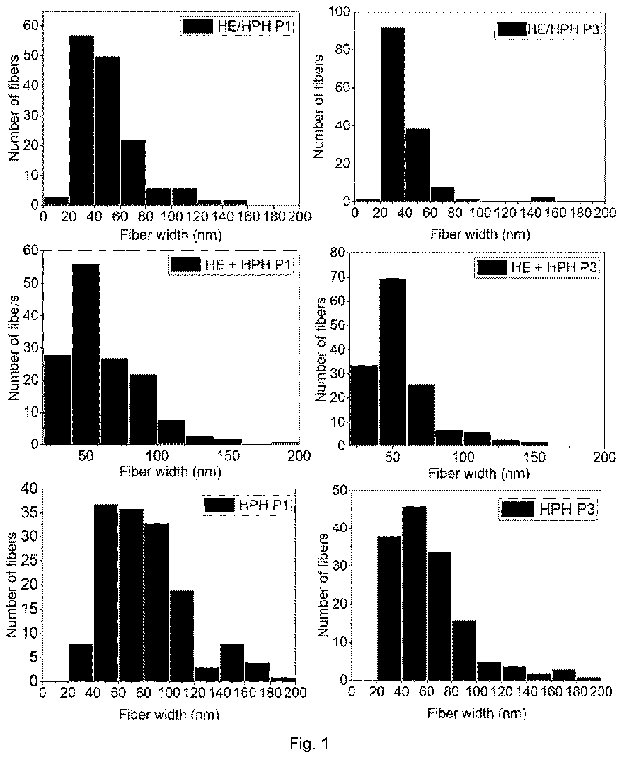

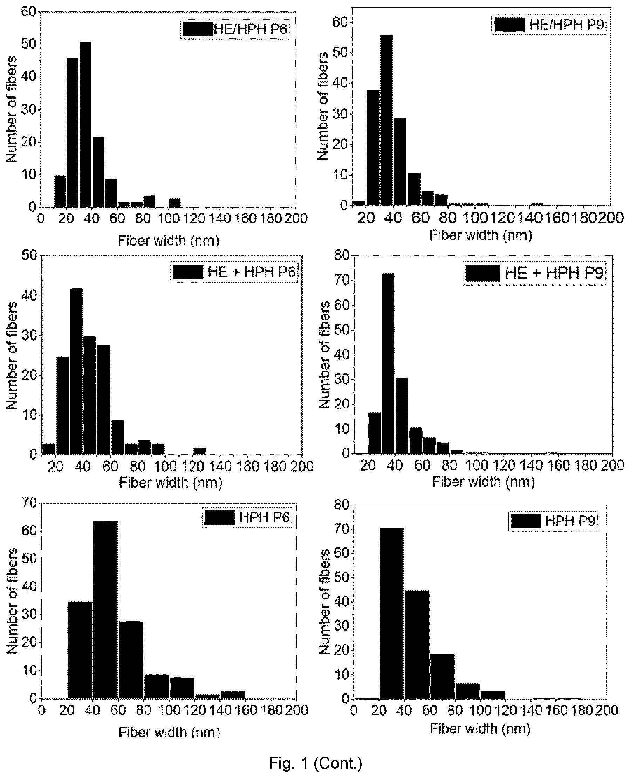

Figure 1 shows histograms of cellulose nanofibers showing the distribution of the size of the cellulose fibers within a nanocellulose composition obtained at the different stages (P1, P3, P6, P9) of the process of the invention (HE/HPH), a process comprising a first enzymatic hydrolysis followed by an HPH (HE + HPH) and a process only comprising HPH (HPH).

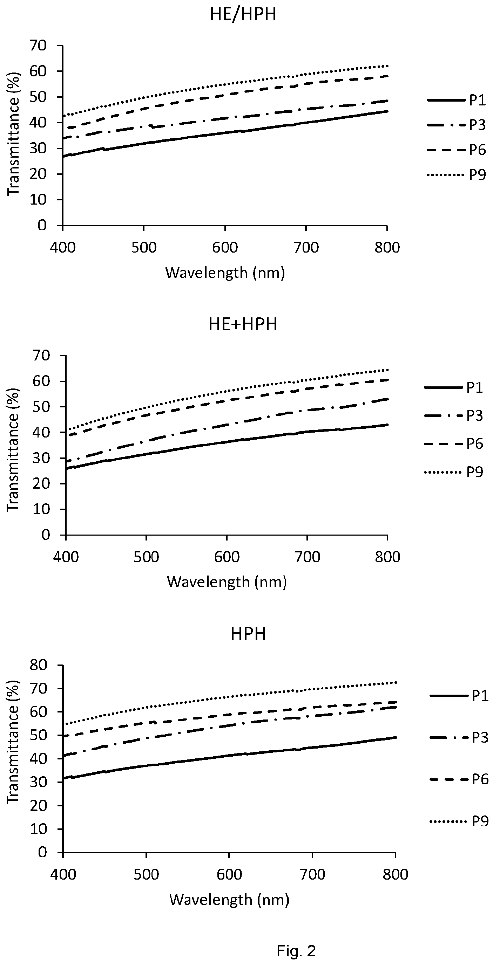

Figure 2 shows the transmittance values of compositions of nanocellulose fibers obtained at the different stages (P1, P3, P6, P9) of the process of the invention (HE/HPH), a process comprising a first enzymatic hydrolysis followed by an HPH (HE + HPH) and a process only comprising HPH (HPH).

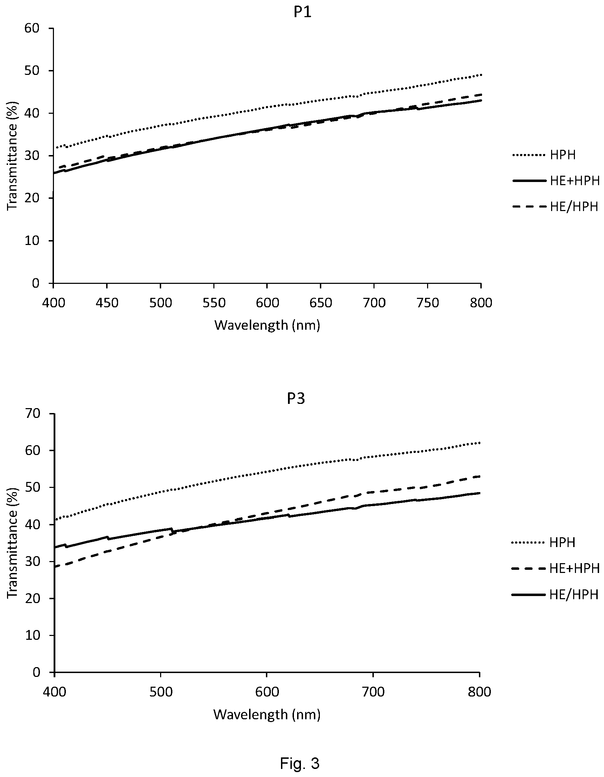

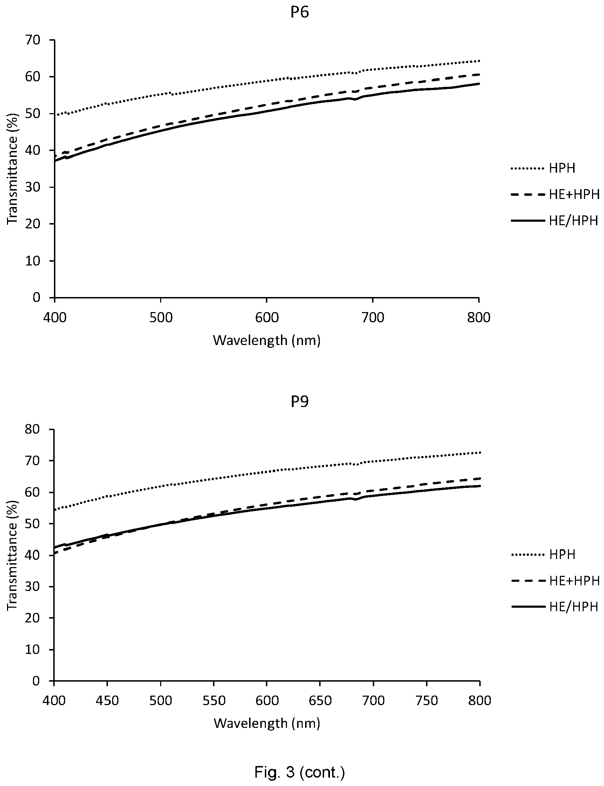

Figure 3 shows the transmittance values of compositions of nanocellulose fibers obtained from the process of the invention (HE/HPH), a process comprising a first enzymatic hydrolysis followed by an HPH (HE + HPH) and a process only comprising HPH (HPH), at the different stages (P1, P3, P6, P9) of the corresponding homogenization process.

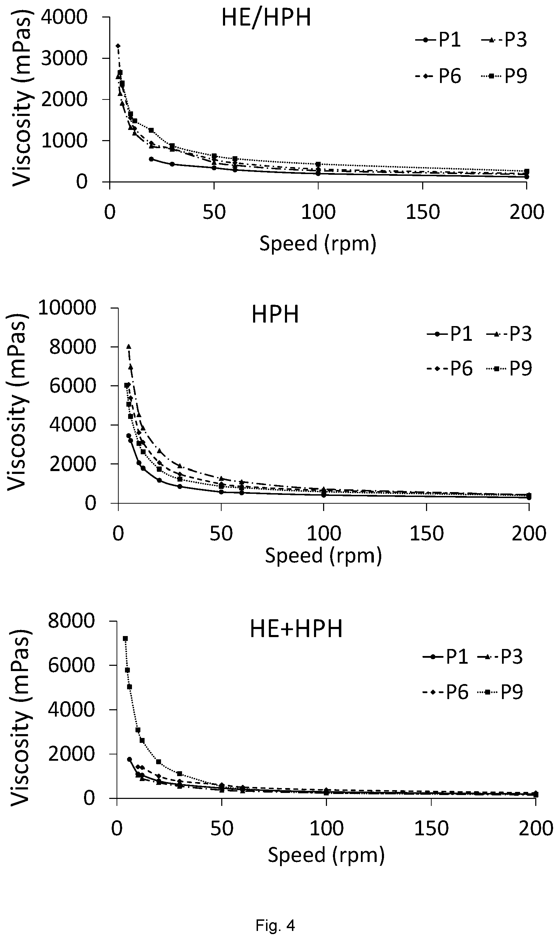

Figure 4 shows the viscosity values of compositions of nanocellulose fibers obtained at the different stages (P1, P3, P6, P9) of the process of the invention (HE/HPH), a process comprising a first enzymatic hydrolysis followed by an HPH (HE + HPH) and a process only comprising HPH (HPH).

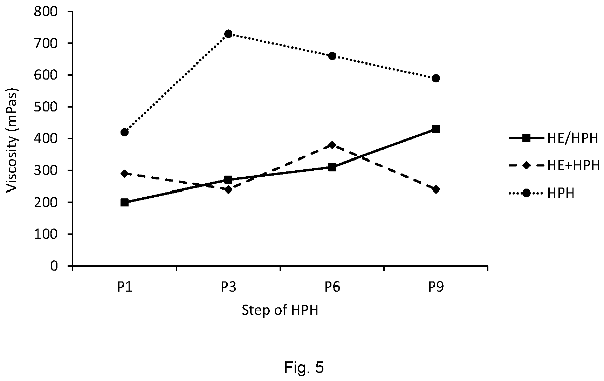

Figure 5 shows the viscosity values of compositions of nanocellulose fibers obtained from the process of the invention (HE/HPH), a process comprising a first enzymatic hydrolysis followed by an HPH (HE + HPH) and a process only comprising HPH (HPH), at the different stages (P1, P3, P6, P9) of the corresponding homogenization process.

### DETAILED DESCRIPTION OF THE INVENTION

The authors of the invention have found that an enzymatic treatment for the hydrolysis of cellulose fibers can be efficiently performed at high pressure conditions, in particular, at the same time as a high pressure mechanical treatment. As a result, the authors have developed a method for obtaining a nanocellulose composition from a composition of cellulose fibers, that comprises treating the cellulose composition with an enzymatic treatment and a high pressure mechanical treatment simultaneously. Thus, they have developed a method that allows obtaining a nanocellulose composition with high quality from a cellulose fiber' s composition with reduced energy consumption, costs and time, as compared to other well-known methods, such as those comprising only a mechanical treatment, or a hydrolysis treatment followed, in a sequential manner, by a mechanical treatment.

### 1- Method of the invention

In a first aspect, the invention is addressed to a method for obtaining a nanocellulose composition that comprises treating a composition comprising cellulose fibers with:
(i) an enzymatic hydrolysis treatment and,
(ii) a high pressure mechanical treatment at a pressure of between 50 bars - 1500 bars,
wherein treatments (i) and (ii) are performed simultaneously.

In a particular embodiment, treatments (i) and (ii) of the method of the invention are performed simultaneously on the composition of cellulose fibers.

The term "cellulose fiber", as used herein, refers to fibers, preferably made with ethers or esters of cellulose, wherein cellulose is a polymer made of glucose molecules attached to each other by β-1,4-glycosidic bonds. A cellulose molecule may be several hundred to over 10,000 glucose units long. It is a straight chain polymer, generally long and rod-like, and thus differs from starch, for instance, which is a coiled molecule. As a result of these differences in structure as compared to starch and other carbohydrates, cellulose cannot be generally broken down into its glucose subunits by enzymes produced by animals. The cellulose fibers can be obtained from different sources, including plants, animals and bacteria. In addition to cellulose, the fibers may also contain hemicellulose and lignin, with different percentages of these components altering the mechanical properties of the fibers. In particular, the major constituents of natural cellulose fibers are cellulose, lignin, moisture, hemicellulose, pectin and residual chemical components that can be present as ash.

In an embodiment, the cellulose fibers comprised in the composition used in the method of the invention is any cellulose fiber falling within the definition above. Thus, in a particular embodiment, the cellulose fibers comprised in the composition used in the method of the invention comprise cellulose, lignin, hemicellulose, pectin, residual chemical compounds, moisture, or combinations thereof. In another particular embodiment, they comprise cellulose, lignin, hemicellulose or combinations thereof.

In another embodiment, the cellulose fibers comprised in the composition used in the method of the invention are cellulose fibers from any source. In a particular they are obtained from plants, animals, bacteria and combinations thereof.

In a particular embodiment, the cellulose fibers comprised in the composition used in the method of the invention are cellulose fibers obtained from plants. In a more particular embodiment, the cellulose fibers comprised in the composition used in the method of the invention are cellulose fibers obtained from wood residues, bark, bark wood residues, leaves of plants, potato pulp, rice husk, sisal, hemp, flax, kenaf, cotton, coconut husk or combinations thereof. Other examples of plant-derived materials that can be used as a source of cellulose fibers include paper or recycled paper.

In another particular embodiment, the cellulose fibers comprised in the composition used in the method of the invention are cellulose fibers obtained from marine invertebrates, preferably from tunicates, more preferably from animals from the *Ascidiacea* class. In a particular embodiment, the cellulose fibers comprised in the composition used in the method of the invention are obtained from tunicates from the species *Halocynthia roretzi, Halocynthia papillosa, Metandroxarpa uedai* and combinations thereof. In another particular embodiment, the cellulose fibers comprised in the composition used in the method of the invention are obtained from the tunic of tunicates, preferably from the tunic of any of the tunicates referred in any of the embodiments herein.

In another particular embodiment, the cellulose fibers comprised in the composition used in the method of the invention are obtained from bacteria, preferably from bacteria from the species *Gluconacetobacter xylinus.*

In a particular embodiment, the cellulose fibers comprised in the composition used in the method of the invention are obtained from wood residues, bark, bark from wood residues, leaves of plants, potato pulp, rice husk, sisal, hemp, flax, kenaf, cotton, coconut husk, animals from the class *Ascideiacea,* animals from the species *Halocynthia roretzi, Halocynthia papillosa, Metandroxarpa uedai,* bacteria from the species *Halocynthia roretzi, Halocynthia papillosa, Metandroxarpa uedai* and combinations thereof.

In another particular embodiment, the cellulose fibers of the composition treated with the method of the invention have a size of 0.1-100 µm, preferably of 0.1-20 µm in width. The length of the cellulose fibers are typically 10 µm to several mm. However, since they are generally intertwined, the length of the cellulose fibers is generally difficult to determine with certainty. Thus, the size of the cellulose fibers is typically defined by its width. As well understood by a skilled person, when a size is given for a cellulose fiber, if not specified, said number is generally understood to refer to the width of the fiber and not to its length. Methods to determine the size, or width size, of cellulose fibers, or nanocellulose fibers in a composition, are well known by an expert in the field. Non-limiting examples of such methods include those provided in the examples of the invention, based on TEM image using ImageJ processing software.

In a particular embodiment, the cellulose fibers comprised in the composition treated with the method of the invention have a size of 0.1-100, 0.1-75, 0.1-50, 0.1-40, 0.1-30, 0.1-20, 0.1-10, 0.1-5, 0.1-4, 0.1-3, 0.1-2, 0.1-1 µm in width. In another particular embodiment, the cellulose fibers comprised in the composition treated with the method of the invention have a size of around 100, 75, 50, 40, 30, 20, 10, 7, 5, 4, 3, 2, 1 µm in width, preferably around 5 µm, more preferably, around 1 µm in width. In another particular embodiment, the cellulose fibers comprised in the composition treated with the method of the invention have a size of less than 100, 75, 50, 40, 30, 20, 10, 7, 5, 4, 3, 2, 1 µm in width, preferably less than 5 µm, more preferably, less than 2 µm in width.

The expression "nanocellulose composition", or "nanofibrillated cellulose composition", or "NFC composition" as used herein, refers to a composition that comprises nanosized cellulose fibers. The nanosized cellulose fibers, as used herein, refers to cellulose fibers as defined above with a width in the range of nanometers, in particular in the range of 999 nm to 1nm, preferably in the range of 10-100nm. Methods to determine the width size of cellulose fibers in a nanocellulose composition include those used to determine the size of cellulose fibers in a cellulose composition and provided in the embodiment above referring to the size of the cellulose fibers of the composition treated with the method of the invention.

In a particular embodiment, the nanocellulose fibers comprised in the nanocellulose composition obtained with the method of the invention have a width size of 1-999, 1-500, 1-250, 1-100, 5-100, 10-100, 1-90, 10-90, 1-80, 10-80, 1-75, 10-75, 1-70, 10-70, 1-65, 10-65, 1-60, 10-60, 20-60, 1-55, 10-55, 20-55, 1-50, 10-50, 20-50, 1-45, 10-45, 20-45, 1-40, 10-40, 20-40, 1-35, 10-35, 20-35, 1-30, 10-30, 20-030, 1-25, 10-25, 20-25, 1-20, 10-20, 1-15, 1-10 nm, preferably of 10-100 nm, more preferably of 20-60 nm. In an even preferred embodiment, they have a width size of 20-40nm. In another particular embodiment, the nanocellulose fibers comprised in the nanocellulose composition obtained with the method of the invention have a width size of less than 999, 750, 500, 250, 100, 90, 80, 75, 70, 65, 60, 55, 50, 45, 40, 35, 30, 25, 20, 15, 10 nm, preferably of less than 100nm, more preferably of less than 60 nm. In an even preferred embodiment, they have a width size of less than 40nm. In another particular embodiment, the nanocellulose fibers comprised in the nanocellulose composition have a width size of around 999, 750, 500, 250, 100, 90, 80, 75, 70, 65, 60, 55, 50, 45, 40, 35, 30, 25, 20, 15, 10 nm, preferably of around 45nm. In an even preferred embodiment, they have a width size of around 35 nm. In a particular embodiment, the term "around", as used herein in the context of the width size of the nanocellulose fibers, refers to +- 3 nm.

The expression "enzymatic treatment", as used herein, refers to a treatment during which the activity of at least one enzyme of interest takes place. When the treatment is applied to a specific composition, said composition is thus exposed to the activity of the at least one enzyme of interest. As well understood by a skilled person, for the efficient activity of the enzyme to take place, the enzyme/s of interest has/ve to be added to said composition at a specific concentration, in a specific buffer and maintained for a certain time at a specific temperature, all of which are specific for the enzyme/s added. Thus, the enzymatic treatment of a composition of interest comprises adding to said composition of interest, another composition comprising at least one enzyme of interest. The latter composition is referred to as the enzymatic composition. Thus, in a particular embodiment, the enzymatic treatment of the method of the invention comprises adding an enzymatic composition to the composition comprising cellulose fibers treated with the method of the invention.

In a particular embodiment, the enzymatic composition added to the composition comprising cellulose fibers treated with the method of the invention is referred herein as "the enzymatic composition of the invention".

In another embodiment, the composition comprising cellulose fibers treated with treatments (i) and (ii) of the method of the invention is herein referred to as the "composition comprising cellulose fibers treated with the method of the invention", "the composition treated with the method of the invention" or "the composition comprising cellulose fibers".

In another embodiment, the composition comprising the composition treated with the method of the invention and the enzymatic composition of the invention is herein referred to as "the composition of the invention".

In a particular embodiment, the at least one enzyme comprised in the enzymatic composition of the invention is a cellulase enzyme. Thus, in a particular embodiment, the enzymatic treatment of the method of the invention comprises adding at least a cellulase enzyme to the composition comprising the cellulose fibers.

The term "cellulase", a used herein, refers to enzymes produced primarily by fungi, bacteria, and protozoans that catalyze cellulolysis, the decomposition of cellulose and of some related polysaccharides. The name is also used for any naturally occurring mixture or complex of various such enzymes, that act serially or synergistically to decompose cellulosic material.

Cellulases break down the cellulose molecule into monosaccharides such as beta-glucose, or shorter polysaccharides and oligosaccharides. The specific reaction catalyzed by cellulases is the hydrolysis of the 1,4-beta-D-glycosidic linkages in cellulose, hemicellulose, lichenin, and/or cereal beta-D-glucans. The type of intermediate units obtained from the cellulolysis of cellulose depend on the number of glucose molecules that are connected in said units, being cellobiose when two glucose molecules are connected (such as maltose), cellotriose when three glucose units are connected (such as β -D pyranose), cellotetraose when four glucose units are connected. Because cellulose molecules bind strongly to each other, cellulolysis is relatively difficult compared to the breakdown of other polysaccharides such as starch.

Thus, in a particular embodiment, the enzymatic treatment of the method of the invention is an enzymatic hydrolysis treatment. Thus, in a preferred embodiment, the enzymatic hydrolysis treatment of the method of the invention comprises adding at least a cellulase enzyme to the composition comprising the cellulose fibers.

The group of enzymes referred to as cellulases are commonly divided into:
- endocellulases (EC 3.2.1.4) or endoglucanase that randomly cleave internal bonds of cellulose at amorphous sites that create new chain ends. This group of cellulases include endo-1,4-beta-D-glucanase (beta-1,4-glucanase; beta-1,4-endoglucan hydrolase; endoglucanase D; 1,4-(1,3,1,4)-beta-D-glucan 4-glucanohydrolase).
- Exocellulases or cellobiohydrolases (EC 3.2.1.91) that cleave two to four units from the ends of the exposed chains produced by endocellulase, resulting in tetrasaccharides or disaccharides, such as cellobiose. Exocellulases are further classified into type I, that work processively from the reducing end of the cellulose chain, and type II, that work recessively from the nonreducing end.
- Cellobiases (EC 3.2.1.21) or beta-glucosidases that hydrolyse the exocellulase product into individual monosaccharides.
- Oxidative cellulases depolymerize cellulose by radical reactions, as for instance cellobiose dehydrogenase (acceptor).
- Cellulose phosphorylases depolymerize cellulose using phosphates instead of water.

In a particular embodiment, the at least one cellulase enzyme used in the method of the invention is selected from any of the cellulases indicated above. In another particular embodiment, the at least one cellulase enzyme used in the method of the invention is selected from the list consisting of endoglucanase, the endoglucanase 1,4-beta-D-glucanase, a cellobiohydrolase, a β-glucosidase, and combinations thereof. In a preferred embodiment, the at least one cellulase enzyme used in the method of the invention is the endoglucanase 1,4-beta-D-glucanase. In another embodiment, the cellulase enzyme used in the method of the invention is the endoglucanase 1,4-beta-D-glucanase.

In a particular embodiment, the at least one enzyme, preferably the at least one cellulase enzyme, used in the method of the invention is added to the composition treated with the method of the invention at a concentration with respect to the weight of the cellulase fibers comprised in the composition treated with the method of the invention of at least 50, 75, 100, 150, 200, 250, 300, 350, 400, 450, 500, 600, 700, 800, 900, 1000 g/t, preferably of at least 200 g/t. In another embodiment, the at least one enzyme, preferably the at least one cellulase enzyme, used in the method of the invention is added to the composition treated with the method of the invention at a concentration with respect to the weight of the cellulase fibers comprised in the composition treated with the method of the invention of 50-1000, 75-800, 100-500, 100-400, 100-350, 200-300 g/t, preferably of 200-300 g/t. In a preferred embodiment, the at least one enzyme, preferably the at least one cellulase enzyme, is added at a final concentration with respect to the weight of cellulose fibers in the composition treated with the method of the invention of 100g/t-400g/t, preferably 200-300g/t.

In a particular embodiment, any of the concentrations of enzyme indicated above are referred to with respect to the dry weight of cellulose fibers comprised in the composition treated with the method of the invention.

In a particular embodiment, the enzymatic composition of the invention comprises a buffer selected from the list consisting of sodium acetate buffer, phosphate buffer, sodium citrate buffer, citrate phosphate buffer and combinations thereof. In a preferred embodiment, the composition of the invention comprises sodium acetate buffer. In a particular embodiment, the sodium acetate buffers is at 0.1, 1., 5, 10, 20, 50, 100, 250, 500 mM, preferably at 50 mM. In another embodiment, the composition of the invention comprises phosphate buffer. In another embodiment, the composition of the invention comprises sodium acetate buffer, wherein the sodium acetate buffer is preferably at 0.1, 1., 5, 10, 20, 50, 100, 250, 500 mM, preferably at 50 mM. In another embodiment, the composition of the invention comprises citrate phosphate buffer, wherein the citrate phosphate buffer is preferably at 0.1, 1., 5, 10, 20, 50, 100, 250, 500 mM, preferably at 75 mM.

In a particular embodiment, once the enzymatic composition of the invention is added to the composition treated with the method of the invention, the pH of the composition of the invention is of 1-11, 1.5-10, 2-9.5, 3-9, 3.5-8.5, 4-8, 4.25-7, 4.5-6, 4.7-5, 4.8-4.9, preferably of 3.5-8.5. In a preferred embodiment, once the enzymatic composition of the invention is added to the composition treated with the method of the invention, the pH of the composition of the invention is of 1, 1.5, 2, 2.5, 3, 3.5, 4, 4.25, 4.5 4.6, 4.7, 4.8, 4.9, 5, 5.2, 5.5, 5.7, 6, 6.5, 7, 7.5, 8, 8.5, 9, 10, 11, preferably of 4.8. Thus, in a particular embodiment, the method of the invention is performed at any pH as that indicated in the embodiments above. In a preferred embodiment, treatment (i) and (ii) of the method of the invention are performed in the composition of the invention at a pH as that indicated in the embodiments above. In a particular embodiment, the enzymatic composition of the invention is at a pH mentioned in the embodiments above. In another particular embodiment the composition treated with the method of the invention is at a pH mentioned in the embodiments above. In another embodiment, the composition of the invention is at a pH indicated in the embodiments above.

In a particular embodiment, the cellulose fibers comprised in the composition treated with the method of the invention are at a concentration of at least 0.1%, 0.2%,0.3%, 0.5%, 0.6%, 0.7%, 0.8%, 0.9%, 1%, 1.5%, 2%, 3%; 4%; 5%; 6%, 7%, 8%; 9%; 19%, 12%, 15%, 17%, 20%, 25%, 30%, 40%, 50%,60%, 70%, 80%, 90%, 95%, 100% in a w/w %, preferably at least at 1% in a w/w %. In a preferred embodiment, the cellulose fibers comprised in the composition comprising the cellulose fibers treated with the method of the invention are at a concentration of 0.1%-25%, 0.5%-20%, 0.5%-15%, 1¡0.5%-10%, 0.5%-9%, 0.5%-8%, 0.5%-7%, 0.5%-6%, 05%-5%, 0.5%-4%, 0.5%-3%, 0.5%-2%, 1-2%, preferably of 1-2%, in a w/w %.

In another particular embodiment, the cellulose fibers comprised in the composition of the invention are at a concentration of at least 0.1%, 0.2%,0.3%, 0.5%, 0.6%, 0.7%, 0.8%, 0.9%, 1%, 1.5%, 2%,; 3%; 4%; 5%; 6%, 7%, 8%; 9%; 19%, 12%, 15%, 17%, 20%, 25%, 30%, 40%, 50%,60%, 70%, 80%, 90%, 95%, 100% in a w/w %, preferably at least at 1% in a w/w %. In a preferred embodiment, the cellulose fibers comprised in the composition of the invention are at a concentration of 0.1%-25%, 0.5%-20%, 0.5%-15%, 1¡0.5%-10%, 0.5%-9%, 0.5%-8%, 0.5%-7%, 0.5%-6%, 05%-5%, 0.5%-4%, 0.5%-3%, 0.5%-2%, 1-2%preferably of 1-2%, in a w/w %.

In a particular embodiment, the enzymatic treatment of the method of the invention is performed at a temperature of between 20°C-80°C, 30°C -70°C, 40°C-60°C, 45°C-55°C, preferably of between 40°C-60°C. In another particular embodiment, the enzymatic treatment of the method of the invention is performed at a temperature of 30°C, 35°C, 40°C, 45°C, 50°C, 55°C, 60°C, 65°C, 70°C, preferably of 50°C. Thus, in a particular embodiment, the method of the invention is performed at a temperature of between 20°C-80°C, 30°C -70°C, 40°C-60°C, 45°C-55°C, preferably of between 40°C-60°C. In another particular embodiment, the method of the invention is performed at a temperature of 30°C, 35°C, 40°C, 45°C, 50°C, 55°C, 60°C, 65°C, 70°C, preferably of 50°C. In a preferred embodiment, treatments (i) and (ii) of the method of the invention are performed at a temperature of between 20°C-80°C, 30°C -70°C, 40°C-60°C, 45°C-55°C, preferably of between 40°C-60°C. In another preferred embodiment, treatments (i) and (ii) of the method of the invention are performed at a temperature of 30°C, 35°C, 40°C, 45°C, 50°C, 55°C, 60°C, 65°C, 70°C, preferably of 50°C.

In an embodiment, the temperature at which the method of the invention, or the treatments of the inventions are performed is the temperature at which the composition of the invention is in the method of the invention. In an embodiment, the temperature at which the method of the invention, or the treatments of the inventions are performed is the temperature at which the enzymatic composition of the invention is in the method of the invention. In another particular embodiment, the temperature at which the method of the invention, or the treatments of the inventions are performed is the temperature at which the composition treated with the method of the invention is in the method of the invention.

In a particular embodiment, the enzymatic treatment of the method of the invention, preferably treatment (i) of the method of the invention, is performed in the absence of 1-butyl-3-methylimidazolium chloride. In a particular embodiment, treatments (i) and (ii) of the method of the invention are performed in the absence of 1-butyl-3-methylimidazolium chloride. In another particular embodiment, the composition of the invention does not comprise 1-butyl-3-methylimidazolium chloride. In another particular embodiment, the composition comprising cellulose fibers treated with the method of the invention does not comprise 1-butyl-3-methylimidazolium chloride. In another particular embodiment, the enzymatic composition of the invention does not comprise 1-butyl-3-methylimidazolium chloride.

The expression "high pressure mechanical treatment", as used herein, refers to any mechanical treatment during which a high pressure is applied. The term high pressure as used herein, refers to any pressure above 1 bar, preferably of 50-1500 bars. Methods to determine the pressure at which a treatment is performed are well known by a skilled person. Non-limiting examples of said methods include the use of a pressure gauge. The term "mechanical treatment", as used herein, refers to a treatment that comprises modifying the physical conditions to which a composition is exposed to, wherein said physical conditions are speed, pressure, a specific force, temperature etc. Non limiting examples of said mechanical treatment include grinding, centrifugation, or simply exerting a specific pressure on a sample. In a particular embodiment, the high pressure mechanical treatment used in the method of the invention refers to a mechanical treatment as just defined, during which the pressure is modified, in particular, wherein the pressure is increased to above 1 bar, preferably to 50-1500 bars. In a particular embodiment, the pressure at which the high pressure mechanical treatment of the invention is performed is increased to 50-1500, 100-1250, 150-1000, 200-950, 300-900, 350-850, 400-800, 450-750, 500-700, 550-650 bars, preferably to 300-900 bars. In a particular embodiment, the pressure at which the high pressure mechanical treatment of the invention is performed is of at least 50, 100, 150, 200, 250, 300, 350, 400, 450, 500, 550, 600, 650, 700, 750, 800, 850, 900, 950, 1000, 1250, 1500 bars. In a particular embodiment, the pressure at which the high pressure mechanical treatment of the invention is performed is of less than 1500, 1400, 1300, 1200, 1100, 1000, 950, 900, 850, 800, 750, 700, 650, 600, 550, 500, 450, 400, 350, 300, 250, 200, 150, 100, 50 bars preferably of less than 1000 bars.

In a particular embodiment of the method of the invention, the high pressure mechanical treatment of the method of the invention comprises subjecting the composition of the invention to at least one cycle at 50-600, 100-550, 150-500, 150-450, 150-400, 150-350, 150-300, 150-200 bars, preferably at 150-400 bars. In a preferred embodiment, the high pressure mechanical treatment of the method of the invention comprises subjecting the composition of the invention to at least one cycle at 150, 200, 300, 400, 500, 600 bars, preferably at 300 bars.

In another particular embodiment of the method of the invention, the high pressure mechanical treatment of the method of the invention comprises subjecting the composition of the invention to at least one cycle at 300-900, 350-850, 400-800, 450-750 bars, 500-700, 550-650 bars, preferably at 450-750 bars. In a preferred embodiment, the high pressure mechanical treatment of the method of the invention comprises subjecting the composition of the invention to at least one cycle at 300, 350, 400, 450, 500, 550, 600, 650, 700, 750, 800, 850 bars, preferably at 600 bars.

In another particular embodiment of the method of the invention, the high pressure mechanical treatment of the method of the invention comprises subjecting the composition of the invention to at least one cycle at 650-1500, 700-1250, 750-1000, 800-1000, 850-1000, preferably at 800-1000 bars. In a preferred embodiment, the high pressure mechanical treatment of the method of the invention comprises subjecting the composition of the invention to at least one cycle at 650, 700, 750, 800, 850, 900, 950, 1000 bars, 1250, 1500, preferably at 900 bars.

In another particular embodiment, the high pressure mechanical treatment of the method of the invention comprises subjecting the composition of the invention to at least one cycle at 50-600, 100-550, 150-500, 150-450, 150-400, 150-350, 150-300, 150-200 bars, preferably at 150-400 bars, followed by at least one cycle at 300-900, 350-850, 400-800, 450-750 bars, 500-700, 550-650 bars, preferably at 450-750 bars, followed by at least one cycle at 650-1500, 700-1250, 750-1000, 800-1000, 850-1000, preferably at 800-1000 bars. In another particular embodiment, the high pressure mechanical treatment of the method of the invention comprises subjecting the composition of the invention to at least one cycle at 50, 100, 150, 200, 300, 400, 500, 600 bars, preferably at 300 bars, followed by at least one cycle at 300, 350, 400, 450, 500, 550, 600, 650, 700, 750, 800, 850 bars, preferably at 600 bars, followed by at least one cycle at 650, 700, 750, 800, 850, 900, 950, 1000, 1250, 1500 bars, preferably at 900 bars.

In another particular embodiment, the high pressure mechanical treatment of the method of the invention comprises subjecting the composition of the invention to 1, 2, 3, 4, 5, 6, 7, 8, 9, 10 cycles, preferably 3 cycles, at 50-600, 100-550, 150-500, 150-450, 150-400, 150-350, 150-300, 150-200 bars bars, preferably at 150-400 bars, followed by 1, 2, 3, 4, 5, 6, 7, 8, 9, 10 cycles, preferably 3 cycles, at 300-900, 350-850, 400-800, 450-750 bars, 500-700, 550-650 bars, preferably at 450-750 bars, followed by 1, 2, 3, 4, 5, 6, 7, 8, 9, 10 cycles, preferably 3 cycles at 650-1500, 700-1250, 750-1000, 800-1000, 850-1000, preferably at 800-1000 bars. In another particular embodiment, the high pressure mechanical treatment of the method of the invention comprises subjecting the composition of the invention to 1, 2, 3, 4, 5, 6, 7, 8, 9, 10 cycles, preferably 3 cycles, at 50, 100, 150, 200, 300, 400, 500, 600 bars, preferably at 300 bars, followed by 1, 2, 3, 4, 5, 6, 7, 8, 9, 10 cycles, preferably 3 cycles, at 300, 350, 400, 450, 500, 550, 600, 650, 700, 750, 800, 850 bars, preferably at 600 bars, followed by 1, 2, 3, 4, 5, 6, 7, 8, 9, 10 cycles, preferably 3 cycles, at 650, 700, 750, 800, 850, 900, 950, 1000, 1250, 1500 bars, preferably at 900 bars.

The term "cycle", as used herein in the context of the high pressure mechanical treatment of the invention, refers to a period of time during which a sample is treated to be exposed to a pressure drop for a certain amount of time. In the context of the HPH or the microfluidizer process, said cycle comprises passing the sample through all the circuitry of the homogenizer or the microfluidizer once, and exposing the sample once to the corresponding pressure drop, i.e. passing once the sample by the valve or membrane with very narrow slits of the HPH or by the Y-type or Z-type narrow channel of the microfluidizer at high pressure.

In a particular embodiment, a cycle of the high pressure mechanical treatment of the invention lasts for at least 0.01, 0.02, 0.03, 0.04, 0.05, 0.06, 0.07, 0.08, 0.09, 0.1, 0.11, 0.12. 0.15, 0.17, 0.2, 0.25, 0.3, 0.35, 0.4, 0.45, 0.5, 0.55, 0.6, 0.65, 0.7, 0.75, 0.8, 0.85, 0.9, 1 min/g of dry cellulose of the composition treated with the method of the invention, preferably 0.1min/g of dry cellulose of the composition treated with the method of the invention.

Methods to increase the pressure of a process are well-known by an expert in the field. Non-limiting examples of such methods include reducing the volume that can be occupied by a sample of interest, while maintaining or increasing, the temperature of the process, or increasing the temperature at which a sample of interest is exposed to, while maintaining, or reducing, the volume that can be occupied by said sample, wherein the sample of interest is that to be exposed to the high pressure process. In a particular embodiment, the method used to increase the pressure in the high pressure mechanical treatment of the invention comprises reducing the volume that can be occupied by a sample of interest, while maintaining or slightly increasing the temperature at which the process is performed. Methods to increase the pressure of a process by reducing the volume that can be occupied by a sample of interest, while maintaining or slightly increasing the temperature at which the process is performed are well-known by an expert in the field. Non-limiting examples of such methods include a high pressure homogenization process, using a microfluidizer, or applying an increasing force on a close volume occupied by the sample of interest using a piston. In a particular embodiment, the sample of interest referred herein is the composition of the invention.

In a particular embodiment, the high pressure mechanical treatment of the method of the invention comprises a high pressure homogenization process, a microfluidization process, or applying an increasing force on a close volume occupied by the sample of interest using a piston, preferably a high pressure homogenization process. In another particular embodiment, the high pressure mechanical treatment of the method of the invention is a high pressure homogenization process, is a microfluidization process, or consists of applying an increasing force on a close volume occupied by the sample of interest using a piston, preferably a high pressure homogenization process.

The expression "High pressure Homogenization" or "HPH", as used herein, refers to any process that forces a stream of primarily liquid sample through a system which subjects it to any one of a number of forces which is intended to homogenize the sample and/or reduce the particle sizes of any components within it. One of the most common setups consists of a tank to which high pressure is applied in order to force the liquid sample contained therein through a valve or membrane with very narrow slits. This act causes high shear, a large pressure drop, and cavitation, all of which act to homogenize the sample. Sometimes the high pressure stream is directed at a blade, ring, or plate, upon which the sample collides at a high speed, to aid in homogenization. High pressure homogenizations are most commonly used for creating emulsions and for cell lysis when relatively large volumes are being processed. High pressure homogenization is commonly performed with high pressure homogenizers.

In an embodiment, the high pressure mechanical treatment of the invention is performed with a high pressure homogenizer or a microfluidizer, preferably with a high pressure homogenizer. Thus, in a preferred embodiment, the enzymatic treatment of the invention, i.e. treatment (i) of the method of the invention, and the high pressure mechanical treatment of the invention, i.e. treatment (ii) of the method of the invention, are performed in a high pressure homogenizer or a microfluidizer, preferably in a high pressure homogenizer. In another preferred embodiment, the method of the invention is performed in a high pressure homogenizer or in microfluidizer, preferably in a high pressure homogenizer.

The term "high pressure homogenizer", as used herein, refers to the machine or mechanical structure that can perform the high pressure homogenization process as defined above. The high pressure homogenizer thus comprises a tank to which high pressure is applied, a valve or membrane with very narrow slits (through which a sample contained in the tank is forced to pass by when it is in use). Sometimes it also comprises a blade, ring, or plate, upon which the sample collides at a high speed when it is in use, to aid in homogenization.

The term "microfluidization process", as used herein, refers to a process commonly used in pharmaceutical industry for production of micro and nanoscale size materials, including liposomal products, emulsions, and nanofibrillated cellulose that comprises using a pump to create high pressure to disintegrate fibers using shear forces. Fiber suspension is fed into an inlet and then forced through a Y-type or Z-type narrow channel under high pressure. This results in acceleration of the suspension that creates high shear rate and eventually breaks up the fibers. A microfluidization process is commonly performed with a microfluidizer.

The term "microfluidizer" as used herein refers to a machine or mechanical structure that can perform de microfluidization process as defined above. The microfluidizer thus, generally comprises a pump to create high pressure to disintegrate fibers using shear forces, an inlet (in which the fiber suspension is fed into, when it is in use), and an Y-type or Z-type narrow channel (under which the fiber suspension is forced to pass through under high pressure, when it is in use).

In an embodiment, the method of the invention is performed in 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in 1.1h. In another embodiment, the method of the invention is performed in less than 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in less than 1.2 hours. Therefore, in a particular embodiment, treatment (i) of the method of the invention is performed in 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in 1.1h. In another embodiment, treatment (i) of the method of the invention is performed in less than 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in less than 1.2 hours. In another particular embodiment, treatment (ii) of the method of the invention is performed in 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in 1.1h. In another embodiment, treatment (ii) of the method of the invention is performed in less than 0.5, 0.75, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.25, 3.5, 3.75, 4, 4.5, 5 hours, preferably in less than 1.2 hours. In another particular embodiment, both treatment (i) and treatment (ii) of the method of the invention are performed in the time periods indicated in the embodiments above for treatment (i).

In an embodiment, the method of the invention for obtaining the nanocellulose composition of the invention is performed with respect to the total weight of the dried cellulose fibers of the composition treated with the method of the invention, in less than 0.112, 0.1, 0.0.9, 0.08, 0.07, 0.06, 0.05, 0.04, 0.03, 0.029, 0.028, 0.027, 0.026, 0.025, 0.024, 0.023, 0.022, 0.021, 0.02, 0.019, 0.018, 0.017, 0.016, 0.015, 0.014, 0.013, 0.012, 0.011, 0.010 h/g, preferably in less than 0.025 h/g. In another preferred embodiment, the method of the invention is performed in less than 0.022h/g of the dried cellulose fibers of the composition treated with the method of the invention.

In another embodiment, the method of the invention is performed with respect to the total weight of the dried cellulose fibers of the composition treated with the method of the invention, in 0.112, 0.1, 0.09, 0.08, 0.07, 0.06, 0.05, 0.04, 0.03, 0.029, 0.028, 0.027, 0.026, 0.025, 0.024, 0.023, 0.022, 0.021, 0.02, 0.019, 0.018, 0.017, 0.016, 0.015, 0.014, 0.013, 0.012, 0.011, 0.010 h/g, preferably in 0.022 h/g.

In an embodiment, treatment (i) of the method of the invention is performed in the time periods referred in the embodiments above expressed in h/g of dried cellulose of the composition treated with the method of the invention. In an embodiment, treatment (ii) of the method of the invention is performed in the time periods referred in the embodiments above expressed in h/g of dried cellulose of the composition treated with the method of the invention. In an embodiment, treatment (i) and (ii) of the method of the invention are performed in the time periods referred in the embodiments above expressed in h/g of dried cellulose of the composition treated with the method of the invention.

In an embodiment, the composition comprising the cellulose fibers treated with the method of the invention is an aqueous composition.

In an embodiment, the composition treated with the method of the invention is an aqueous composition of cellulose fibers. Therefore, in a particular embodiment, the weight of the dried cellulose fibers comprised in the composition treated with the method of the invention is equivalent to the weight of the dried composition treated with the method of the invention.

In another embodiment, the composition of the invention is an aqueous composition.

The term "aqueous composition", as used herein, refers to a composition that comprises water, preferably distilled water, more preferably distilled sterile water, and a compound of interest suspended in it, or, in a particular embodiment, even dissolved in it. In the context of the composition treated with the method of the invention or the composition of the invention, the compound of interest comprises the cellulose fibers as defined herein. In a particular embodiment, in the context of the composition treated with the method of the invention or the composition of the invention, the compound of interest consists of the cellulose fibers as defined herein.

In an embodiment, the composition comprising the cellulose fibers treated with the method of the invention as defined in any of the embodiment herein is an aqueous composition as just defined. In another embodiment, the composition of the invention as defined in any of the embodiment herein is an aqueous composition as just defined. In a particular embodiment, the composition comprising the nanocellulose fibers obtained with the method of the invention as defined in any of the embodiments herein is an aqueous composition as just defined.

In a particular embodiment, the cellulose fibers comprised in the aqueous composition in any of the embodiment herein are at a concentration of at least 0.1%, 0.2%,0.3%, 0.5%, 0.6%, 0.7%, 0.8%, 0.9%, 1%, 1.5%, 2%3%; 4%; 5%; 6%, 7%, 8%; 9%; 19%, 12%, 15%, 17%, 20%, 25%, 30%, 40%, 50%,60%, 70%, 80%, 90%, 95%, 100% in a w/w %, preferably at least at 1% in a w/w %. In another particular embodiment, the cellulose fibers comprised in the aqueous composition in any of the embodiment herein are at a concentration of 0.1%-25%, 0.5%-20%, 0.5%-15%, 1¡0.5%-10%, 0.5%-9%, 0.5%-8%, 0.5%-7%, 0.5%-6%, 05%-5%, 0.5%-4%, 0.5%-3%, 0.5%-2%, 1-2%, preferably of 1-2%, in a w/w %. In a particular embodiment, the composition treated with the method of the invention is an aqueous composition wherein the cellulose fibers are at a concentration of 0.1%-25%, 0.5%-20%, 0.5%-15%, 1¡0.5%-10%, 0.5%-9%, 0.5%-8%, 0.5%-7%, 0.5%-6%, 05%-5%, 0.5%-4%, 0.5%-3%, 0.5%-2%, 1-2%, preferably of 1-2%, in a w/w %. In a particular embodiment, the composition treated with the method of the invention is an aqueous composition wherein the cellulose fibers are at a concentration of at least 0.1%-25%, 0.5%-20%, 0.5%-15%, 1¡0.5%-10%, 0.5%-9%, 0.5%-8%, 0.5%-7%, 0.5%-6%, 05%-5%, 0.5%-4%, 0.5%-3%, 0.5%-2%, 1-2%, preferably of at least 1-2%, in a w/w %.

In an embodiment, the composition comprising the cellulose fibers treated with the method of the invention has been treated with a refining process. In a particular embodiment, the composition comprising the cellulose fibers treated with the method of the invention has been treated with a refining process before performing treatment (i) and (ii) of the method of the invention. As well understood by a skilled person, said refining process allows reducing the size of the cellulose fibers, in particular its width, in the composition treated with treatments (i) and (ii) of the method of the invention.

Thus, in a particular embodiment, a second method of the invention is a method for obtaining a nanocellulose composition that comprises:
a) treating a composition comprising cellulose fibers in a refining process, and
b) treating the composition obtained from step a) with
   (i) an enzymatic hydrolysis treatment and,
   (ii) a high pressure mechanical treatment at a pressure of between 50 bars - 1500 bars,
   wherein treatments (i) and (ii) are performed simultaneously on the composition of cellulose fibers obtained from step a).

In an embodiment, the composition obtained from step a) of the second method of the invention is as the composition comprising the cellulose fibers treated with the method of the invention as defined in any of the embodiments herein.

In another embodiment, the composition treated in step a) of the second method of the invention is as the composition comprising the cellulose fibers treated with the method of the invention as defined in any of the embodiment herein, except in that the width size of the cellulose fibers is of 1-1000, 1-500, 1-200, 1-100, 5-75, 5-50, 5-40, 5-30, 5-20, 10-20 µm in width, preferably of 10-20 µm in width. In another embodiment, the composition treated in step a) of the second method of the invention is as the composition comprising the cellulose fibers treated with the method of the invention as defined in any of the embodiments herein, except in that the width size of the cellulose fibers is of less than 1000, 500, 200, 100, 75, 50, 40, 30, 20, 10, 5 preferably less than 20 µm in width. In another embodiment, the composition treated in step a) of the second method of the invention is as the composition comprising the cellulose fibers treated with the method of the invention as defined in any of the embodiments herein, except in that the width size of the cellulose fibers is of at least 5, 10, 20, 30, 40, 50, 75, 100, 200, 500, 1000 µm in width, preferably of at least 10 µm in width. As well understood by a skilled person, all the embodiments herein related to the composition treated with the method of the invention apply to the composition treated with step a) of the second method of the invention, except those defining the width size of the cellulose fibers comprised in it.

The term "refining process", as used herein, refers to a process that allows reducing the size of cellulose fibers from 1-100 µm, preferably of 10-50 µm in width, to less than 5 µm in width, even to less than 2, or less than 1 µm in width. Methods to perform said processes are well known by an expert in the field. Non-limiting examples of said methods include a milling process of cellulose fibers, those performed with disk refiners, PFI mills, manual cutting, or Valley beaters, as decribed in Andresen et al., 2006, Cellulose, 13, 665-677; ; Henriksson et al., 2008, Biomacromolecules, 9(6), 1579-1585; Herrick et al., 1983, Journal of Applied Polymer Science, 28, 797-813; Iwamoto et al., 2005, Applied Physics A: Materials Science & Processing, 81, 1109-1112; Nakagaito & Yano, 2004, Applied Physics A: Materials Science & Processing, 78, 547-552.; Turbak et al., 1983, Journal of Applied Polymer Science, 28, 815827. Additional non-limiting examples of refining methods include chemical pretreatments such as acid hydrolysis (as described in Henriksson et al., 2007, European Polymer Journal, 43, 34343441; Henriksson et al., 2008, Biomacromolecules, 9(6), 15791585), alkaline treatment (as described in Zhang et al., 2005, Carbohydrate Polymers, 61, 427-433) and TEMPO-mediated oxidation (as described in Nakagaito & Yano, 2004, Applied Physics A: Materials Science & Processing, 78, 547-552).

In an embodiment, the refining process of the invention refers to any of the methods referred in the definition of "refining process" above, preferably is a milling process, and is performed before treatments (i) and (ii) of the method of the invention. Said process reduces the size of the cellulose fibers to less than 5 µm in width, preferably to less than 2 µm in width, even more preferably, to less than 1 µm in width.

In a preferred embodiment, the refining process of the invention refers to a milling process of the cellulose fibers of the composition treated in step a) of the second method of the invention and performed before treatments (i) and (ii) of the method of the invention. Said process reduces the size of the cellulose fibers to less than 5 µm in width, preferably to less than 2 µm in width, even more preferably, to less than 1 µm in width.

In an embodiment, any of the methods of the invention comprise an additional step of isolating the nanocellulose composition obtained after treatment (i) and (ii). In a particular embodiment, isolation of the nanocellulose composition comprises putting the obtained nanocellulose composition in a container. In another particular embodiment, isolation of the nanocellulose composition comprises cleaning the obtained nanocellulose composition, preferably by rinsing it with water, preferably with distilled water, more preferably with sterile distilled water.

In an embodiment, the nanocellulose composition obtained from any of the methods of the invention is as defined herein for the nanocellulose composition obtained by the method of the invention. In a particular embodiment, the nanocellulose composition obtained from any of the methods of the invention comprises nanocellulose fibers with a width size as indicated above for the nanocellulose fibers comprised in the nanocellulose composition obtained with the method of the invention.

The term "viscosity", as used herein, refers to the parameter of a composition or of a fluid, that measures its resistance to deformation at a given rate. Viscosity refers to the quantification of the internal frictional force that arises between adjacent layers of fluid that are in relative motion. For instance, when a viscous fluid is forced through a tube, it flows more quickly near the tube's axis than near its walls. In such a case, experiments show that some stress (such as a pressure difference between the two ends of the tube) is needed to sustain the flow through the tube. This is because a force is required to overcome the friction between the layers of the fluid which are in relative motion. So, for a tube with a constant rate of flow, the strength of the compensating force is proportional to the fluid's viscosity. Methods to determine the viscosity of a composition are well-known by an expert in the field and include those used in the examples of the invention that comprise using a rotatory viscometer.

In an embodiment, the nanocellulose composition obtained at the end of any of the methods of the invention has a viscosity at 200 rpm of 50-1000, 50-800, 50-700, 75-600, 100-500, 100-400, 150-300 mPas, preferably of 100-500 mPas. In another embodiment, the nanocellulose composition obtained at the end of any of the methods of the invention has a viscosity at 200 rpm of at least 50, 75, 100, 150, 200, 250, 300, 350, 400, 450, 500, 550, 600 mPas, preferably at least 100 mPas. In another embodiment, the nanocellulose composition obtained at the end of any of the methods of the invention has a viscosity at 200 rpm of less than 1000, 900, 800, 700, 600, 500, 400, 300, 200, 150 mPas preferably of less than 500 mPas.

In another embodiment, the nanocellulose composition obtained at the end of any of the methods of the invention has a viscosity at 20 rpm of 500-2500, 750-2250, 1000-2000, 1100-1900, 1100-1800, 1200-1800, 1300-1800, 1400-1800, 1500-1800, 1600-1800, 1700-1800 mPas, preferably of 1600-1800 mPas. In another embodiment, the nanocellulose composition obtained at the end of any of the methods of the invention has a viscosity at 20 rpm of at least 500, 600, 700, 750, 800, 900, 1000, 1100, 1200, 1300, 1400, 1500, 1600, 1700, 1800, 1900, 2000 mPas, preferably of at least 1600 mPas. In another embodiment, the nanocellulose composition obtained at the end of any of the methods of the invention has a viscosity at 20 rpm of less than 2000, 1900, 1800, 1700, 1600, 1500, 1400, 1300, 1200, 1100, 1000, 900, 800, 750, 700, 600, 500, 400 mPas, preferably of less than 1800 mPas.

Methods to determine the viscosity of a composition at a certain rpm have been provided in the definition of viscosity for a certain rpm applied by the rotational viscosimeter. Thus, in a particular embodiment, the rpm values provided in the embodiments related to the viscosity of the nanocellulose composition of the invention refer to the rpm of a rotatory viscometer.

In a particular embodiment, the values provided in the embodiments above for the viscosity of the nanocellulose composition refer to those of the nanocellulose composition of the invention at a concentration of 1 wt%.

The term "transmittance", as used herein, refers to the effectiveness of the surface of a material in transmitting radiant energy. It is the fraction of incident electromagnetic power that is transmitted through a sample, in contrast to the transmission coefficient, which is the ratio of the transmitted to incident electric field. Transmittance refers to energy loss by absorption, scattering, reflection, etc. Methods to determine the transmittance of a composition are well known by an expert in the field and include the methods described in the examples of the invention, including the use of a UV-vis spectrophotometer.

In an embodiment, the nanocellulose composition obtained at the end of any of the methods of the invention has a transmittance at a wavelength of 400nm of 10%-100%, 15-90%, 35%-60%, 35%-55%, 35%-50%, 35%-45%, preferably of 35%-45%. In another embodiment, the nanocellulose composition obtained at the end of any of the methods of the invention has a transmittance at a wavelength of 400nm of at least 10%, 15%, 20%, 25%, 30%, 40%, 45%, 505, 55%, preferably of at least 35%. In another embodiment, the nanocellulose composition obtained at the end of any of the methods of the invention has a transmittance at a wavelength of 400nm of less than 100%, 90%, 80%, 75%, 70%, 65%, 60%, 55%, 50%, 45%, 40%, 35%, 30%, 25%, 20%, 15%, 10%, preferably of less than 35%.

In another embodiment, the nanocellulose composition obtained at the end of any of the methods of the invention has a transmittance at a wavelength of 700 nm of 35%-100%, 40%-90%, 45%-80%, 50-75%, 55%-75%, 55%-70%, 55%-65%, preferably of 55%-65%. In another embodiment, the nanocellulose composition obtained at the end of any of the methods of the invention has a transmittance at a wavelength of 700 nm of at least 35%, 40%, 45%, 50%, 55%, 60%, 65%, 70%, 75%, 80%, preferably of at least 55%. In another embodiment, the nanocellulose composition obtained at the end of any of the methods of the invention has a transmittance at a wavelength of 700 nm of less than 100%, 90%, 80%, 75%, 70%, 65%, 60%, 55%, 50%, 45%, 40%, 35%, preferably of less than 65%.

In another embodiment, the nanocellulose composition obtained at the end of any of the methods of the invention has a transmittance at a wavelength of 800 nm of 50%-100%, 55%-90%, 60%-80%, 60-75%, 60%-70%, 60%-65%, preferably of 60%-65%. In another embodiment, the nanocellulose composition obtained at the end of any of the methods of the invention has a transmittance at a wavelength of 800 nm of at least 50%, 55%, 60%, 65%, 70%, 75%, 80%, 85%, 90%, preferably of at least 60%. In another embodiment, the nanocellulose composition obtained at the end of any of the methods of the invention has a transmittance at a wavelength of 800 nm of less than 100%, 90%, 80%, 75%, 70%, 65%, 60%, 55%, 50%, 45%, 40%, preferably of less than 70%.

Methods to determine the viscosity of a composition at a certain wavelength have been provided in the definition of transmittance comprising the use of a UV-vis spectrophotometer working in a certain wavelength. Thus, in a particular embodiment, the wavelength values (nm) provided in the embodiments related to the transmittance of the nanocellulose composition of the invention refer to the nm of the wavelength at which a UV-vis spectrophotometer is working, or the wavelength of a UV-vis spectrophotometer.

### 2- Nanocellulose composition of the invention

In a second aspect, the invention is addressed to a nanocellulose composition obtained by the method according to the first aspect.

As well understood by a skilled person, the nanocellulose composition from the second aspect of the invention is as defined in the first aspect of the invention for the nanocellulose composition obtained by any of the methods of the invention.

In a particular embodiment, the definitions and embodiments of the first aspect of the invention apply to the second aspect of the invention.

In another particular embodiment, the term "comprises" is substituted by "consists of" in any of the embodiments of the first and second invention. In another particular embodiment, the term "consists of" is substituted by "comprises" in any of the embodiments of first and second aspect of the invention.

The invention is therefore defined by the following clauses:
1- A method for obtaining a nanocellulose composition that comprises treating a composition comprising cellulose fibers with:
   (i) an enzymatic hydrolysis treatment and,
   (ii) a high pressure mechanical treatment at a pressure of between 50 bars - 1500 bars,
   wherein treatments (i) and (ii) are performed simultaneously on the composition of cellulose fibers.
2- The method according to clause 1 wherein the enzymatic hydrolysis treatment comprises adding at least a cellulase enzyme to the composition comprising the cellulose fibers.
3- The method according to clause 2 wherein the at least one cellulase enzyme is selected from the list consisting of an endoglucanase, the endoglucanase 1,4-beta-D-glucanase, a cellobiohydrolase, a β-glucosidase, and combinations thereof.
4- The method according to clause 3 wherein the at least one cellulase consists of the endoglucanase 1,4-beta-D-glucanase.
5- The method according to any of clauses 2-4 wherein the at least one cellulase enzyme is added at a final concentration with respect to the dry weight of cellulose fibers in the composition of 100g/t-400g/t, preferably 200-300g/t.
6- The method according to any of clauses 1-5 wherein treatments (i) and (ii) are performed in the composition at a pH of 1.5-10, preferably of 4.8.
7- The method according to any of clauses 1-6 wherein treatments (i) and (ii) are performed at a temperature of between 30-70°C, preferably 40-60°C.
8- The method according to any of clauses 1-7 wherein the high pressure mechanical treatment comprises subjecting the composition to at least two different levels of pressure.
9- The method according to any of clauses 1-8 wherein the high pressure mechanical treatment comprises subjecting the composition to at least one cycle at 150-400bars, preferably at 300 bars.
10- The method according to clauses 1-9 wherein the high pressure mechanical treatment comprises subjecting the composition to at least one cycle at 450-750 bars, preferably at 600 bars.
11- The method according to any of clauses 1-10 wherein the high pressure mechanical treatment comprises subjecting the composition to at least one cycle at 800-1000 bars, preferably at 900 bars.
12- The method according to any of clauses 1-11, wherein the high pressure mechanical treatment comprises subjecting the composition to at least one cycle at 150-400bars, preferably at 300 bars, followed by at least one cycle at 450-750 bars, preferably at 600 bars, followed by at least one cycle at 800-1000 bars, preferably at 900 bars.
13- The method according to any of clauses 7-12 wherein the number of cycles at 150-400 bars, preferably at 300 bars, are 3, and/or the number of cycles at 450-750 bars, preferably at 600 bars, are 3, and/or the number of cycles at 800-1100 bars, preferably at 900 bars, are 3.
14- The method according to any of clauses 7-3 wherein each cycle lasts 0.1 min/g of dry cellulose in the composition.
15- The method according to any of the previous clauses, wherein the method is performed in less than 0.1h/g, preferably in less than 0.025h/g, with respect to the total weight of the dried cellulose fibers composition.
16-The method according to clauses 15, wherein the method is performed in 0.022h/g, with respect to the total weight of the dried cellulose fibers composition.
17- The method according to any of the previous clauses, wherein the method is performed in a High Pressure homogenizer or in a microfluidizer.
18- The method according to any of the previous clauses wherein the cellulose fibers are of 5 micrometers or less in width.
19- The method according to any of the previous clauses, wherein the composition comprising the cellulose fibers is an aqueous composition wherein the cellulose fibres are at a concentration of 1-2%.
20- The method according to any of the previous clauses wherein the composition comprising the cellulose fibers has been treated with a refining process.
21- The method according to any of the previous clauses that comprises an additional step of isolating the nanocellulose composition obtained after treatments (i) and (ii).
22- The method according to any of the previous clauses wherein the nanocellulose composition obtained at the end of the method comprises fibers with a width of 10-100 nm, preferably of 20-60 nm.
23- The method according to any of the previous clauses wherein the nanocellulose composition obtained at the end of the method has a viscosity at 200 rpm of 100mPas-500 mPas, preferably of 150 mPas-300mPas, and/or at 20 rpm of 1100 mPas-1800mPas, preferably of 1600-1800mPas.
24- The method according to any of the previous clauses, wherein the nanocellulose composition obtained at the end of the method has a transmittance at 400nm of 35%-60%, preferably of 35%-45%, and/or at 700 nm of 55%-75%, preferably 55%-65%, and/or at 800nm 60%-75%, preferably 60%-65%.
25- A nanocellulose composition obtained by the method according to any of clauses 1-24.

The following examples and drawings are provided by way of illustration, and are not intended to be limiting for the present invention.

### EXAMPLES

### Example 1. Nanocellulose (CNF) production

Enzymatic nanocellulose was prepared by one-step reaction by adding an enzyme and subjecting the mixture to a homogenization process. The enzymatic hydrolysis is commonly a cellulose pulp pretreatment in nanocellulose obtention, followed by a mechanical step of fibrillation, such as homogenization. In order to demonstrate the possibility of obtaining enzymatic nanocellulose in one-step, the enzymatic treatment was performed simultaneously with the mechanical treatment.

In a first step, cellulose pulp obtained from wood residues was subjected to mechanical treatments by series of refining process to reduce the fiber width to a size of less than 5µm.

Then, the obtained cellulose pulp was suspended in sodium acetate buffer to give a 1% solution with pH of 4.8. The endo-β-1, 4- glucanase enzyme (Serzyme 50), supplied by Sertec-20 S.L. (Spain) was added to the cellulose pulp in a 240g/t and the suspension was subjected to a high pressure mechanical treatment using a GEA Niro Soavi (Type: PANTHER NS3006L) for three passes at 300bar, three passes at 600bar and 3 passes at 900bar (NFC_HE/HPH). The mechanical treatment was performed at 50°C.

As comparative purpose, the cellulose pulp was subjected to an enzymatic pretreatment previously to mechanical treatment. For this, the cellulose pulp was suspended in a sodium acetate buffer (1% wt), pH 4.8, 50°C at 18h with the commercial enzymatic complex Serzym50 (240g/t) (NFC_HE+HPH). Finally, a blank sample was also obtained, for this, the cellulose pulp was suspended in sodium acetate buffer at pH 4.8 (NFC_HPH). Both samples (NFC_HE+HPH and NFC_HPH) was subjected to the same mechanical treatment as the NFC_HE/HPH.

### Example 2. Characterization of the CNF

The proposed approach was validated by studying the evolution of micro/nanocellulose fibers of different steps during the homogenization process by using different characterization techniques. The characterized steps were step 1(P1), step 3(P3), step 6 (P6) and step 9 (P9), wherein:
- step 1 (P1) corresponds to the step just before the sample is exposed to the 3 passes at 300 bars,
- step 3 (P3) corresponds to the step just after the sample is exposed to the 3 passes at 300 bars,
- step 6 (P6) corresponds to the step just after the sample is exposed to the 3 passes at 600 bars,
- step 9 (P9) corresponds to the step just after the sample is exposed to the 3 cycles at 900 bars.

### TEM

The fiber width was analysed by TEM image using ImageJ processing software. TEM images were acquired using a JEOL JEM 1010, operated at 100kV accelerating voltage. For the preparation of TEM samples, a drop of 0.01w/w% nanocellulose suspension in water were deposited over a carbon-formvar Cu grid. The average fiber width in nm was determined using data obtained from at least 100 fibers.

The size distribution histograms of obtained CNFs depicted in Figure 1 shows the measured width for cellulose nanofibers. TEM measurements indicated that width cellulose nanofibers decrease with the homogenization steps and the size distribution is narrower.

Enzymatic nanocellulose (HE/HPH and HE+HPH) has narrower cellulose nanofibers compared to the non-enzymatically treated sample (HPH). As can be observed, the sizes and distributions for nanocellulose obtained in one-step reaction (HE/HPH) are similar to those obtained for nanocellulose subjected to a previous enzymatic hydrolysis process (18h).

The mean and deviation obtained for each of step are shown in Table 1, where it is observed that the average width of the fibers as well as the deviation obtained for the cellulose nanofibers obtained in one step (HE/HPH) is are like those obtained for nanocellulose subjected to a previous enzymatic hydrolysis process (18h) Also, the comparison with the blank (HPH) shows how the sizes obtained for enzymatic nanocellulose are always smaller and additionally with less deviation.

**Table 1. Mean sizes and deviation of cellulose nanofibers**

| | **P1** | **P3** | **P6** | **P9** |
|---|---|---|---|---|
| **HPH** | 81±33 | 62±33 | 59±27 | 53±32 |
| **HE/HPH** | 53±32 | 43±24 | 37±17 | 39±16 |
| **HE+HPH** | 64±34 | 58±28 | 45±18 | 42±16 |

### Transmittance

The transmittance was measured in and UV-vis spectrophotometer (JASCO V750) in the wavelength range of 400-800 nm. Measurements were performed on samples in deionized water at a concentration of 0.1 wt%

Transmittance was correlated directly with the nanofibers size, the generation of fibers in the nano range causes an increase in transmittance as shown in Figure 2, where an increase in transmittance is observed with the homogenization steps.

Also, as show Figure 3, the transmittance of cellulose nanofibers obtained for cellulose nanofibers with enzymatic treatment is very similar for both (HE/HPH and HE+HPH). Also, the transmittance of blank sample (HPH) is higher despite its larger width probably due to the presence of different quantity of nanomaterials in nano range and the presence of bundles.

### Viscosity

Viscosity of nanocellulose was measured in a rotary viscometer (Myr VR3000) in the speed range of 10-200 rpm at a concentration of 1 wt% with the R3 spindle. In all cases the viscosity of nanocellulose decrease when the velocity increase as shown in figure 4.

For comparative purpose, figure 5 show the viscosity at 100rpm for all the obtained nanocellulose. The viscosity of enzymatic nanocelluloses (HE/HPH and HE+HPH) increase with the homogenization steps, but the viscosity of non-enzymatic nanocellulose (HPH) increase until step 3 and decrease afterwards. Also, the range of viscosity of enzymatic nanocelluloses (HE/HPH and HE+HPH) is very similar for both and always lower than the viscosity of non-enzymatic sample showing the different nature of enzymatically treated samples and the similarity between them.

### Example 3. Processing time

The proposed option of carrying out the enzymatic hydrolysis reaction in one-step, simultaneously with the homogenization steps, without losing quality in the nanocellulose obtained represents a clear advantage in terms of the processing time required in the manufacture of nanocellulose, which can be translated into a reduction in costs.

The processing time of HE+HPH nanocellulose was estimated in 0.112h/g_{dried} and it was reduced to 0.022h/g_{dried} in the case of HE/HPH nanocellulose.

## Claims

1. A method for obtaining a nanocellulose composition that comprises treating a composition comprising cellulose fibers with:
(i) an enzymatic hydrolysis treatment and,
(ii) a high pressure mechanical treatment at a pressure of between 50 bars - 1500 bars,
wherein treatments (i) and (ii) are performed simultaneously on the composition of cellulose fibers.

2. The method according to claim 1 wherein the enzymatic hydrolysis treatment comprises adding at least a cellulase enzyme to the composition comprising the cellulose fibers.

3. The method according to claim 2 wherein the at least one cellulase enzyme is selected from the list consisting of an endoglucanase, the endoglucanase 1,4-beta-D-glucanase, a cellobiohydrolase, a β-glucosidase, and combinations thereof.

4. The method according to claim 3 wherein the at least one cellulase consists of the endoglucanase 1,4-beta-D-glucanase.

5. The method according to any of claims 1-4 wherein the high pressure mechanical treatment comprises subjecting the composition to at least one cycle at 150-400bars, preferably at 300 bars, to at least one cycle at 450-750 bars, preferably at 600 bars, or to at least one cycle at 800-1000 bars, preferably at 900 bars.

6. The method according to any of claims 1-5, wherein the high pressure mechanical treatment comprises subjecting the composition to at least one cycle at 150-400bars, preferably at 300 bars, followed by at least one cycle at 450-750 bars, preferably at 600 bars, followed by at least one cycle at 800-1000 bars, preferably at 900 bars.

7. The method according to any of claims 5 or 6 wherein the number of cycles at 150-400 bars, preferably at 300 bars, are 3, and/or the number of cycles at 450-750 bars, preferably at 600 bars, are 3, and/or the number of cycles at 800-1100 bars, preferably at 900 bars, are 3.

8. The method according to any of the previous claims, wherein the method is performed in less than 0.1h/g, preferably in less than 0.025h/g, with respect to the total weight of the dried cellulose fibers composition.

9. The method according to claim 8, wherein the method is performed in 0.022h/g, with respect to the total weight of the dried cellulose fibers composition.

10. The method according to any of the previous claims, wherein the method is performed in a High Pressure homogenizer or in a microfluidizer.

11. The method according to any of the previous claims wherein the cellulose fibers are of 5 micrometers or less in width.

12. The method according to any of the previous claims, wherein the composition comprising the cellulose fibers is an aqueous composition wherein the cellulose fibers are at a concentration of 1-2%

13. The method according to any of the previous claims that comprises an additional step of isolating the nanocellulose composition obtained after treatments (i) and (ii).

14. The method according to any of the previous claims wherein the nanocellulose composition obtained at the end of the method comprises fibers with a width of 10-100 nm, preferably of 20-60 nm.

15. A nanocellulose composition obtained by the method according to any of claims 1-14.
